# EUROPÄISCHE PATENTSCHRIFT

(11) **EP 1 926 783 B1**
(45) Veröffentlichungstag und Bekanntmachung des Hinweises auf die Patenterteilung: **09.11.2011**
(21) Anmeldenummer: 06792198.1
(22) Anmeldetag: 21.09.2006
(51) Int. Cl.: C09D 5/00

(54) **VERWENDUNG VON PHOSPHONSÄUREDIESTERN UND DIPHOSPHONSÄUREDIESTERN SOWIE THERMISCH HÄRTBARE GEMISCHE, ENTHALTEND PHOSPHONSÄUREDIESTER UND DIPHOSPHONSÄUREDIESTER**
USE OF PHOSPHONIC ACID DIESTERS AND DIPHOSPHONIC ACID DIESTERS AND THERMALLY CURABLE MIXTURES CONTAINING PHOSPHONIC ACID DIESTERS AND DIPHOSPHONIC ACID DIESTERS
UTILISATION DE DIESTERS D'ACIDE PHOSPHONIQUE ET DE DIESTERS D'ACIDE DIPHOSPHONIQUE, AINSI QUE MELANGES A DURCISSEMENT THERMIQUE CONTENANT DES DIESTERS D'ACIDE PHOSPHONIQUE ET DES DIESTERS D'ACIDE DIPHOSPHONIQUE

(30) Priorität: 22.09.2005 DE 102005045150
(43) Veröffentlichungstag der Anmeldung: 04.06.2008
(73) Patentinhaber: BASF Coatings GmbH, 48165 Münster (DE)
(72) Erfinder: POPPE, Andreas, 48324 Sendenhorst (DE); WESTHOFF, Elke, 48565 Steinfurt (DE); GEBAUER, Beate, 48165 Münster (DE); MAYENFELS, Peter, 48163 Münster (DE)
(74) Vertreter: Leifert & Steffan
(86) Internationale Anmeldenummer: PCT/EP2006/009177
(87) Internationale Veröffentlichungsnummer: WO 2007/033826

(56) Entgegenhaltungen:
- EP-A- 1 134 266
- EP-A- 1 475 360
- WO-A-00/55270

## Beschreibung

### Gebiet der Erfindung

Die vorliegende Erfindung betrifft die neue Verwendung von Phosphonsäurediestern und Diphosphonsäurediestern als Reaktionspartner und/oder Katalysatoren. Außerdem betrifft die vorliegende Erfindung neue härtbare Gemische, die Phosphonsäurediester und Diphosphonsäurediester als Reaktionspartner und/oder Katalysatoren enthalten.

### Stand der Technik

Phosphonsäurediester sind Ester der Phosphonsäure [HP(O)(OH)₂], die mit der Phosphorigen Säure [P(OH)₃] tautomer ist. Die Phosphonsäurediester werden häufig nicht ganz korrekt auch als sekundäre Phosphite bezeichnet. Indes sind die echten Derivate der Phosphorigen Säure nur die Triester.

Diphosphonsäurediester sind die Diester der Diphosphonsäure:

(HO)(O)PH-O-PH(O)(OH),

die früher auch als Diphosphorige Säure, bezeichnet wurde.

(vgl. hierzu Römpp Lexikon der Chemie, Georg Thieme Verlag, Stuttgart, New York, 1990, »Phosphite«, »Phosphonate«, »Phosphonsäure«, »Diethylphosphit« und »Dimethylphosphit«).

Thermisch härtbare Gemische, insbesondere Beschichtungsstoffe, die Polyole, Aminoharze und Polyisocyanate enthalten, sind aus dem europäischen Patent EP 1 171 356 B1 oder den internationalen Patentanmeldungen WO 01/09261, WO 01/09260, WO 01/09259 oder WO 01/09231 bekannt. Als Katalysator für die thermische Vernetzung wird eine alkoholische Lösung von saurem Phenylphosphat (»phenyl acid phosphats«) in alkoholischer Lösung verwendet. Die thermisch härtbaren Gemische werden kurz vor ihrer Verwendung aus Mehrkomponentensystemen, insbesondere Zweikomponentensystemen, hergestellt, bei denen eine Komponente die Polyole und die Aminoharze und eine andere Komponente die Polyisocyanate enthält.

Die bekannten thermisch härtbaren Gemische, insbesondere die Beschichtungsstoffe, liefern Beschichtungen, die hart, abriebfest, kratzfest und etchbeständig sowie als Klarlackierungen hochglänzend und klar sind.

Die bekannten thermisch härtbaren Gemische weisen aber Nachteile auf.

So können die alkoholischen Lösungen des sauren Phenylphosphats wegen der hohen Reaktivität der Polyisocyanate gegenüber Alkoholen nicht der betreffenden Komponente zugesetzt werden, was eine Einschränkung der verfahrenstechnischen Freiheitsgrade bedeutet. D. h., dass der Katalysator stets der Polyol und Aminoharz enthaltenden Komponente zugesetzt werden muss, was aber deren Reaktivität so stark erhöhen kann, dass ihre Lagerstabilität in Mitleidenschaft gezogen wird.

Die bekannten thermisch härtbaren Gemische haben außerdem eine Topfzeit, die sich in der Praxis häufig als zu kurz erweist, wodurch im Lackierbetrieb logistische und technische Probleme entstehen. Nicht zuletzt kann dies zu nicht akzeptablen Lackierergebnissen führen.

Es besteht daher ein Bedarf, die Vernetzung von thermisch härtbaren Gemischen, die Polyole, Aminoharze und Polyisocyanate enthalten, weiter zu verbessern.

Indes sind die Mechanismen der thermischen Vernetzung in diesen Gemischen komplex, was die gezielte Weiterentwicklung erschwert. So kommt es in solchen Gemischen bei der thermischen Vernetzung vor allem zu einer Reaktion der Polyisocyanate mit dem aus den Aminoharzen freigesetzten Methanol und nicht zu einer Reaktion mit den Polyolen.

Es müssen daher blockierte Polyisocyanate eingesetzt werden, um ein dreidimensionales Netzwerk zu erhalten, das aus allen drei Bausteinen aufgebaut ist und die Vorzüge der aus Polyol und Polyisocyanat sowie Polyol und Aminoharz aufgebauten Netzwerke in sich vereinigt (vgl. den Artikel von E. S. Ntsihlele und A. Pizzi, »Cross-linked Coatings by Co-Reaction of lsocyanate-Methoxymethyl Melamine Systems«, Journal of Applied Polymer Science, Band 55, Seiten 153 bis 161, 1995). Die Vernetzung mit blockierten Polyisocyanaten läuft aber erst bei höheren Temperaturen, üblicherweise oberhalb 100°C, ab. Die entsprechenden thermisch härtbaren Gemische können daher nicht mehr als Reparaturlacke, die bereits bei Raumtemperatur beginnen zu vernetzen, verwendet werden.

Eine weitere Möglichkeit, ein dreidimensionales Netzwerk zu erhalten, das aus allen drei Bausteinen aufgebaut ist, ist die Verwendung von so genannten "high imino"-Melaminharzen, die eine besonders hohe Reaktivität aufweisen. Diese weisen aber vergleichsweise hohe Molekulargewichte auf, was die Viskosität der betreffenden thermisch härtbaren Gemische in nachteiliger Weise erhöht. Außerdem haben sie je nach eingesetztem Katalysator eine vergleichsweise hohe Neigung, mit sich selbst zu vernetzen, was insbesondere der Lagerstabilität in hohem Maße abträglich ist.

Aus der europäischen Patentanmeldung EP 0 976 723 A2 ist es bekannt, die Reaktion von cycloaliphatischen Polyisocyanaten mit Polyolen zu Polyurethanen durch Dimethylphosphit, Diethylphosphit oder Diphenylphosphit zu katalysieren. Daneben kommt noch eine Vielzahl von anderen Katalysatoren in Betracht.

Aus der europäischen Patentanmeldung EP 1 134 266 A1 sind thermisch härtbare Pulverlacke, die carboxylgruppenhaltige Bindemittel, Verbindungen mit Hydroxyalkylamidgruppen, aromatische Amine (Lichtschutzmittel) und Diphenylphosphit oder Diisooctylphosphit enthalten, bekannt. Neben diesen beiden Phosphiten kommt noch eine Vielzahl von Triestern der Phosphorigen Säure in Betracht. Sie werden als Antioxidantien verwendet.

### Aufgabenstellung

Der vorliegenden Erfindung liegt die Aufgabe zugrunde, eine neue Verwendung von Phosphonsäurediestern und Diphosphonsäurediestern zu finden und so deren Verwendbarkeit zu verbreitern, um die Technik zu bereichern.

Außerdem liegt der vorliegenden Erfindung die Aufgabe zugrunde, neue thermisch härtbare Gemische zu finden, die Phosphonsäurediester und/oder Diphosphonsäurediester enthalten.

Außerdem liegt der vorliegenden Erfindung die Aufgabe zugrunde, neue Reaktionspartner und/oder Katalysatoren für Verbindungen (B), die durch Umesterung, Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen umgesetzt werden können, zu finden.

Außerdem liegt der vorliegenden Erfindung die Aufgabe zugrunde, neue thermisch härtbare Gemische zu finden, die durch Umesterung. Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen härtbar sind.

Die neuen thermisch härtbaren Gemische sollen lagerstabil sein und dennoch bei der thermischen Härtung eine hohe Reaktivität zeigen.

Bei der thermischen Härtung sollen die Umesterung, Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen auch in der Gegenwart von Polyisocyanaten sicher, problemlos und sehr gut reproduzierbar ablaufen.

Dabei sollen die thermisch härtbaren Gemische, die Polyisocyanate enthalten, eine praxisgerechte Topfzeit oder Verarbeitungszeit haben. Außerdem sollen zumindest sowohl die Verbindungen (B), insbesondere die Aminoharze (B), als auch die Polyisocyanate in das sich bei der Härtung bildende dreidimensionale Netzwerk eingebaut werden.

Ferner liegt der vorliegenden Erfindung die Aufgabe zugrunde, neue Reaktionspartner und/oder Katalysatoren für thermisch härtbare Gemische, insbesondere thermisch härtbare Beschichtungsstoffe, bereitzustellen, die aus Zwei- oder Mehrkomponentensystemen, insbesondere Zweikomponentensystemen, hergestellt werden, die eine mindestens eine Verbindung (B) enthaltende Komponente (I) und eine Polyisocyanate enthaltende Komponente (II) umfassen. Dabei sollen die Katalysatoren und/oder Reaktionspartner sowohl in der Komponente (I) und der Komponente (II) vorliegen können, ohne dass die Lagerstabilität insbesondere der Komponente (II) in Mitleidenschaft gezogen wird. Dadurch sollen die Anzahl der verfahrenstechnischen Freiheitsgrade bei der Herstellung und der Verwendung der thermisch härtbaren Gemische signifikant erhöht werden.

Nicht zuletzt liegt der vorliegenden Erfindung die Aufgabe zugrunde, neue thermisch härtbare Gemische, insbesondere thermisch härtbare Beschichtungsstoffe, bereitzustellen, die thermisch gehärtete Materialien, insbesondere Beschichtungen, liefern, die besonders hart, abriebfest, kratzfest und etchbeständig sowie als Klarlackierungen besonders hochglänzend und klar sind.

### Lösung

Demgemäß wurde die neue Verwendung von Phosphonsäurediestern und Diphosphonsäurediestern (A) als Reaktionspartner von und/oder Katalysatoren für Gemische aus Polyisocyanat (C) und Verbindungen (B), die durch Umesterung, Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen umgesetzt werden können, gefunden, was im Folgenden als »erfindungsgemäße Verwendung« bezeichnet wird.

Außerdem wurden die neuen thermisch härtbaren Gemische gefunden, die durch Umesterung, Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen härtbar sind und mindestens einen Phosphonsäurediester und/oder mindestens einen Diphosphonsäurediester (A) und ein Polyisocyanat (C) enthalten und die im Folgenden als »erfindungsgemäße Gemische« bezeichnet werden.

Nicht zuletzt wurde das neue Verfahren zur Herstellung der erfindungsgemäßen Gemische gefunden, bei dem man mindestens eine Verbindung (B) und mindestens einen Phosphonsäurediester und/oder mindestens einen Diphosphonsäurediester (A) und mindestens ein Polyisocyanat (C) miteinander vermischt und die resultierende Mischung homogenisiert, was im Folgenden als »erfindungsgemäßes Verfahren« bezeichnet wird

Weitere Erfindungsgegenstände gehen aus der Beschreibung hervor.

### Vorteile der Erfindung

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Verwendung, der erfindungsgemäßen Gemische und des erfindungsgemäßen Verfahrens gelöst werden konnte.

Insbesondere war es überraschend, dass die erfindungsgemäße Verwendung die Anwendungsmöglichkeiten von Phosphonsäurediestern und Diphosphonsäurediestern (A) außerordentlich verbreiterte und so die Technik außerordentlich bereicherte.

Außerdem war es überraschend, dass die Phosphonsäurediester und/oder Diphosphonsäurediester (A) hervorragende Reaktionspartner von und/oder Katalysatoren für Verbindungen (B) waren, die durch Umesterung, Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen umgesetzt werden konnten.

Außerdem war es überraschend, dass aufgrund der erfindungsgemäßen Verwendung die erfindungsgemäßen Gemische, die durch Umesterung, Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen härtbar waren und hervorragende anwendungstechnischen Eigenschaften zeigten, bereitgestellt werden konnten.

Insbesondere waren die erfindungsgemäßen Gemische lagerstabil und zeigten dennoch bei der thermischen Härtung eine hohe Reaktivität.

Bei der thermischen Härtung der erfindungsgemäßen Gemische lief die Umesterung, Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen auch in der Gegenwart von Polyisocyanaten sicher, problemlos und sehr gut reproduzierbar ab.

Dabei wiesen die erfindungsgemäßen Gemische, die Polyisocyanate enthielten, eine praxisgerechte Topfzeit oder Verarbeitungszeit auf. Außerdem wurden zumindest sowohl die Verbindungen (B), insbesondere die Aminoharze (B), als auch die Polyisocyanate (C) in das sich bei der Härtung bildende dreidimensionale Netzwerk eingebaut.

Nicht zuletzt konnten die erfindungsgemäßen Gemische, insbesondere die erfindungsgemäßen Beschichtungsstoffe, aus Zwei- oder Mehrkomponentensystemen, insbesondere Zweikomponentensystemen, hergestellt werden, die eine mindestens eine Verbindung (B) enthaltende Komponente (I) und eine Polyisocyanate enthaltende Komponente (II) umfassten. Dabei konnten die Katalysatoren und/oder Reaktionspartner sowohl in der Komponente (I) und der Komponente (II) vorliegen, ohne dass die Lagerstabilität insbesondere der Komponente (II), in Mitleidenschaft gezogen wurde. Dadurch konnte die Anzahl der verfahrenstechnischen Freiheitsgrade bei der Herstellung und der Verwendung der erfindungsgemäßen Gemische signifikant erhöht werden.

Nicht zuletzt war es überraschend, dass die erfindungsgemäßen Gemische neue thermisch gehärtete Materialien, insbesondere neue Beschichtungen, lieferten, die besonders hart, abriebfest, kratzfest und etchbeständig sowie als Klarlackierungen besonders hochglänzend und klar waren.

### Ausführliche Beschreibung der Erfindung

Erfindungsgemäß werden die Phosphonsäurediester und/oder Diphosphonsäurediester (A) als Reaktionspartner und/oder Katalysatoren für Verbindungen (B), die durch Umesterung, Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen umgesetzt werden können, verwendet.

Für die erfindungsgemäße Verwendung werden die Phosphonsäurediester und die Diphosphonsäurediester (A) vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern, ausgewählt.

Bevorzugt werden die acyclischen Phosphonsäurediester (A) aus der Gruppe, bestehend aus acyclischen Phosphonsäurediestern (A) der allgemeinen Formel I: 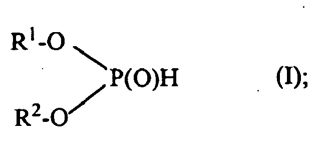 ausgewählt.

In der allgemeinen Formel I sind die Reste R¹ und R² gleich oder voneinander verschieden; vorzugsweise sind sie gleich.

Die Reste R¹ und R² werden aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen, wobei der Strich jeweils die kovalente Bindung zwischen einem Kohlenstoffatom des Rests R¹ oder R² und dem Sauerstoffatom der O-P-Gruppe symbolisiert;
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und wobei der Strich jeweils die kovalente Bindung zwischen einem Kohlenstoffatom des Rests R¹ und R² und dem Sauerstoffatom der O-P-Gruppe symbolisiert; und
- substituiertem und unsubstituiertem Rest- der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom, wobei der Strich die kovalente Bindung zwischen einem Kohlenstoffatom des Rests und dem Sauerstoffatom der O-P-Gruppe symbolisiert;
ausgewählt.

Bevorzugt werden die cyclischen Phosphonsäurediester (A) aus der Gruppe, bestehend aus den cyclischen Phosphonsäurediestern (A) der allgemeinen Formel II: 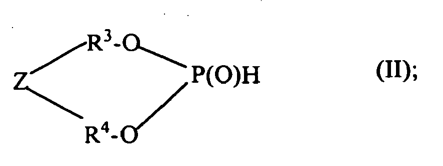 ausgewählt.

In der allgemeinen Formel II sind die Reste R³ und R⁴ gleich oder voneinander verschieden; vorzugsweise sind sie gleich.

Die Reste R³ und R⁴ werden aus der Gruppe, bestehend aus:
- substituiertem und unsubstituiertem, zweibindigem Alkyl- mit 1 bis 20, vorzugsweise 1 bis 10 und insbesondere 1 bis 6 Kohlenstoffatomen, Cycloalkyl- mit 3 bis 20, vorzugsweise 3 bis 10 und insbesondere 3 bis 6 Kohlenstoffatomen und Aryl- mit 5 bis 20, vorzugsweise 6 bis 14 und insbesondere 6 bis 10 Kohlenstoffatomen, wobei der Strich jeweils die kovalente Bindung zwischen einem Kohlenstoffatom des Rests R³ oder R⁴ und dem Sauerstoffatom der O-P-Gruppe symbolisiert;
- substituiertem und unsubstituiertem, zweibindigem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und wobei der Strich jeweils die kovalente Bindung zwischen einem Kohlenstoffatom des Rests R³ und R⁴ und dem Sauerstoffatom der O-P-Gruppe symbolisiert; und
- substituiertem und unsubstituiertem, zweibindigem Rest- der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliziumatom, wobei der Strich die kovalente Bindung zwischen einem Kohlenstoffatom des Rests und dem Sauerstoffatom der O-P-Gruppe symbolisiert;
ausgewählt.

In der allgemeinen Formel II steht die Variable Z für
- eine kovalente Bindung zwischen einem Atom des Rests R³ und einem Atom des Rests R⁴;
- eine zweibindige, verküpfende Gruppe, ausgewählt aus der Gruppe, bestehend aus Sauerstoffatom, substituiertem, insbesondere mit Sauerstoff substituiertem, und unsubstituiertem Schwefelatom, substituiertem, insbesondere mit Alkyl substitiuiertem, Stickstoffatom, substituiertem, insbesondere mit Sauerstoff substituiertem, Phosphoratom und substituiertem, insbesondere mit Alkyl und Alkoxy substituiertem Siliziumatom, insbesondere Sauerstoffatom; oder
- eine zweibindige, verküpfende Gruppe, ausgewählt aus der Gruppe, bestehend aus substituiertem und unsubstituiertem, mindestens ein Heteroatom, ausgewählt aus der Gruppe, bestehend aus Sauerstoffatom, Schwefelatom, Stickstoffatom, Phosphoratom und Siliziumatom, insbesondere Sauerstoffatom, Schwefelatom und Stickstoffatom, enthaltendem oder von Heteroatomen freiem Alkyl mit 1 bis 10, vorzugsweise 1 bis 6 und insbesondere 1 bis 4 Kohlenstoffatomen, Cycloalkyl mit 3 bis 10, vorzugsweise 3 bis 6 und insbesondere 6 Kohlenstoffatomen und Aryl mit 5 bis 10 und insbesondere 6 Kohlenstoffatomen.

Bevorzugt werden die acyclischen Diphosphonsäurediester (A) aus der Gruppe, bestehend aus den acyclischen Diphosphonsäurediestern (A) der allgemeinen Formel III:

(R¹-O)(O)PH-O-PH(O)(O-R²) (III);

worin die Variablen die vorstehend angegebene Bedeutung haben, ausgewählt.

Bevorzugt werden die cyclischen Diphosphonsäurediester (A) aus der Gruppe, bestehend aus den cyclischen Diphosphonsäurediestern (A) der allgemeinen Formel IV: 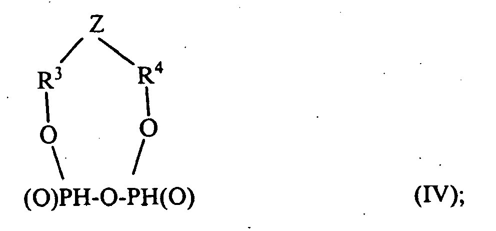 worin die Variablen die vorstehend angegebene Bedeutung haben, ausgewählt.

Als Substituenten für die Reste R¹, R², R³ und R⁴ kommen alle Gruppen und Atome in Betracht, die die Wirkung der Phosphonsäurediester und der Diphosphonsäurediester (A) nicht beeinträchtigen, die Härtungsreaktionen in den erfindungsgemäßen Gemischen nicht inhibieren, nicht zu unerwünschten Nebenreaktionen führen und keine toxische Wirkung hervorrufen. Beispiele geeigneter Substituenten sind Halogenatome, Nitrilgruppen oder Nitrogruppen, bevorzugt Halogenatome, insbesondere Fluoratome, Chloratome und Bromatome.

Vorzugsweise sind die Reste R¹, R², R³ und R⁴ unsubstituiert.

Bevorzugt werden die Reste R¹ und R² aus der Gruppe, bestehend aus Phenyl, Methyl und Ethyl, ausgewählt. Besonders bevorzugt wird Phenyl verwendet.

Bevorzugt werden die acyclischen Phosphonsäurediester (A) der allgemeinen Formel I verwendet.

Besonders bevorzugt werden die Reste R¹ und R² der acyclischen Phosphonsäurediester (A) der allgemeinen Formel I aus der Gruppe, bestehend aus Phenyl, Methyl und Ethyl, ausgewählt. Insbesondere wird Phenyl verwendet.

Ein Beispiel für einen ganzen besonders gut geeigneten Phosphonsäurediester (A) der allgemeinen Formel I ist Diphenylphosphonat, das manchmal von der Fachwelt (nicht ganz korrekt) auch als Diphenylphosphit bezeichnet wird.

Im Rahmen der erfindungsgemäßen Verwendung liegen die Verbindungen (B) alleine neben den Phosphonsäurediestern und/oder Diphosphonsäurediestern (A) vor. Bevorzugt liegen sie in den erfindungsgemäßen Gemischen neben weiteren Bestandteilen vor.

Die Verbindungen (B) werden aus der Gruppe, bestehend aus niedermolekularen, oligomeren und polymeren Verbindungen, ausgewählt.

Bekanntermaßen versteht man unter oligomeren Verbindungen Verbindungen, die aus 3 bis 12 niedermolekularen Struktureinheiten aufgebaut sind.

Bekanntermaßen versteht man unter polymeren Verbindungen Verbindungen, die aus mehr als 8 niedermolekularen Struktureinheiten aufgebaut sind.

Ob ein Fachmann eine Verbindung, die aus 8 bis 12 niedermolekularen Struktureinheiten aufgebaut ist, als Oligomer oder Polymer ansieht, richtet sich in erster Linie nach dem Molekulargewicht der betreffenden Verbindung.

Im Rahmen der erfindungsgemäßen Gemische werden von der Fachwelt insbesondere die niedermolekularen und oligomeren Verbindungen (B) auch als Vernetzungsmittel und die polymeren Verbindungen (B) als Bindemittel bezeichnet.

Die Verbindungen (B) enthalten mindestens zwei, vorzugsweise mindestens drei und insbesondere mindestens vier reaktive funktionelle Gruppen, die im Rahmen der erfindungsgemäßen Verwendung für die Umesterung, Umamidierung, Selbstkondensation von N-Hydroxyalkylaminogruppen und/oder N-Alkoxyalkylaminogruppen, Umacetalisierung von N-Alkoxyalkylaminogruppen und/oder Acetalisierung von N-Hydroxyalkylaminogruppen eingesetzt werden können.

Vorzugsweise werden die reaktiven funktionellen Gruppen der Verbindungen (B) aus der Gruppe, bestehend aus Hydroxylgruppen, Thiolgruppen, primären Aminogruppen, sekundären Aminogruppen, N-Hydroxyalkylaminogruppen und N-Alkoxyalkylaminogruppen, insbesondere Hydroxylgruppen, N-Hydroxyalkylaminogruppen und N-Alkoxyalkylaminogruppen ausgewählt

Vorzugsweise handelt es sich bei den N-Hydroxyalkylaminogruppen der Verbindungen (B) um N-Hydroxymethylaminogruppen.

Vorzugsweise handelt es sich bei den N-Alkoxyalkylaminogruppen der Verbindungen (B) um N-Methoxymethylaminogruppen.

Bevorzugt handelt es sich bei den Verbindungen (B), die die vorstehend beschriebenen N-Hydroxyalkylaminogruppen, insbesondere die N-Hydroxymethylaminogruppen, und/oder die N-Alkoxyalkylaminogruppen, insbesondere die N-Methoxymethylaminogruppen, enthalten, um Aminoharze (B), wie sie beispielsweise im Detail aus
- Bodo Müller/Ulrich Poth, »Lackformulierung und Lackrezeptur - Das Lehrbuch für Ausbildung und Praxis«, Hrsg. Dr. Ulrich Zorll, Vincentz Verlag, Hannover, 2003, »2.2 Einbrennlacke auf Basis von Aminoharzen«, Seiten 124 bis 143, und »4.2 Wässrige Einbrennlacke auf Basis von Aminharzen«, Seiten 206 bis 215,
- Z. W. Wicks Jr., F. Jones und S. P. Pappas, »Organic Coatings - Science and Technology«, 2. Ausgabe, 1999, Wiley-Intercience, New York, Weinheim, »Chapter 9 - Amino Resins«, Seiten 162 bis 179, oder
- Johan Bieleman, »Lackadditive«, Wiley-VCH, Weinheim, New York, 1998, »7.2.2 Melaminharz-vernetzende Systeme«, Seiten 242 bis 250,
bekannt sind.

Vorzugsweise werden die Verbindungen (B), die Hydroxylgruppen, Thiolgruppen, primäre Aminogruppen und/oder sekundäre Aminogruppen, insbesondere aber Hydroxylgruppen, enthalten, aus der Gruppe, bestehend aus Additions- und Kondensationsharzen sowie (Co)Polymerisaten olefinisch ungesättigter Monomere, ausgewählt. Bevorzugt sind sie Bindemittel (B), wie sie üblicherweise in thermisch härtbaren Gemischen verwendet werden.

Insbesondere werden die hydroxylgruppenhaltigen Bindemittel (B), wie sie üblicherweise in thermisch härtbaren Gemischen in Kombination mit Aminoharzen (B) und/oder in Kombination mit den nachstehend beschriebenen Polyisocyanaten (C) eingesetzt werden, verwendet.

Beispiele geeigneter Bindemittel (B) zur Verwendung in Kombination mit Aminoharzen (B) und/oder Polyisocyanaten (C) sind beispielsweise aus
- Bodo Müller/Ulrich Poth, »Lackformulierung und Lackrezeptur - Das Lehrbuch für Ausbildung und Praxis«, Hrsg. Dr. Ulrich Zorll, Vincentz Verlag, Hannover, 2003, »2.2.3 Kombinationspartner für Aminoharze«, Seiten 130 bis 133, »4.2 Wässrige Einbrennlacke auf Basis von Aminoharzen«, Seiten 206 bis 215, und »1.3.1.3 OH-Gruppen-haltige Bindemittel für 2K-PUR-Lacke«, Seiten 104 bis 106,
bekannt.

Überraschenderweise können in einem gegebenen erfindungsgemäßen Gemisch die Reaktionen der Phosphonsäurediester und der Diphosphonsäurediester (A) mit den Verbindungen (B) und die durch die Phosphonsäurediester und die Diphosphonsäurediestern (A) katalysierten Umesterungen, Umamidierungen, Selbstkondensationen von N-Hydroxyalkylaminogruppen und/oder N-Alkoxyalkylaminogruppen, Umacetalisierungen von N-Alkoxyalkylaminogruppen und/oder Acetalisierungen von N-Hydroxyalkylaminogruppen der Verbindungen (B) für sich alleine ablaufen. Es ist aber auch überraschenderweise möglich, dass die betreffenden Reaktionen und die Katalyse simultan nebeneinander oder sukzessiv nacheinander ablaufen.

Noch mehr überrascht, dass die Reaktionen und/oder die Katalyse auch in der Gegenwart von Verbindungen (C) problemlos abläuft, die mindestens eine freie Isocyanatgruppe und vorzugsweise mindestens zwei freie Isocyanatgruppen und insbesondere mindestens drei freie Isocyanatgruppen enthalten.

Beispiele geeigneter Verbindungen (C) sind
- Monoisocyanate (C), wie Ethyl-, Propyl-, Butyl-, Pentyl-, Hexyl -, Heptyl-, Octyl-, Nonyl-, Decyl-, Undecyl-, Lauryl-, Cyclohexyl- oder Phenylisocyanat;
- Diisocyanate (C), wie Tetramethylen-1,4-diisocyanat, Hexamethylen-1,6-diisocyanat, 2,2,4-Trimethylhexamethylen-1,6-diisocyanat, omega,omega'-Dipropyl-äther-diisocyanat, Cyclohexyl-1,4-diisocyanat, Cyclohexyl-1,3-diisocyanat, Cyclohexyl-1,2-diisocyanat, Dicyclohexylmethan-4,4'-diisocyanat, 1,5-Dimethyl-2,4-di(isocyanatomethyl)-benzol, 1,5-Di-methyl-2,4-di(isocyanatoethyl)-benzol, 1,3,5-Trimethyl-2,4-di(isocyanatomethyl)-benzol, 1,3,5-Triethyl-2,4-di(isocyanatomethyl)-benzol, Isophorondiisocyanat, Dicyclohexyldimethylmethan-4,4'-diisocyanat, 2,4-Toluylendiisocyanat, 2,6-Toluylendiisocyanat, Diphenylmethan-4,4'-diisocyanat; und
- Polyisocyanate (C), wie Triisocyanate wie Nonantriisocyanat (NTI) sowie Polyisocyanate (C) auf der Basis der vorstehend beschriebenen Diisocyanate und Triisocyanate (C), insbesondere Oligomere, die Isocyanurat-, Biuret-, Allophanat-, Iminooxadiazindion-, Urethan-, Carbodiimid-, Harnstoff- und/oder Uretdiongruppen enthalten, beispielsweise aus den Patentschriften und Patentanmeldungen CA 2,163,591 A1, US 4,419,513 A, US 4,454,317 A, EP 0 646 608 A1, US 4,801,675 A, EP 0 183 976 A1, DE 40 15 155 A1, EP 0 303 150 A1, EP 0 496 208 A1, EP 0 524 500 A1, EP 0 566 037 A1, US 5,258,482 A, US 5,290,902 A, EP 0 649 806 A1, DE 42 29 183 A1 oder EP 0 531 820 A1 bekannt sind und vorteilhafterweise eine NCO-Funktionalität von 2,0 - 5,0, vorzugsweise von 2,2 - 4,0, insbesondere von 2,5 - 3,8 haben;
- die hochviskosen Polyisocyanate (C), wie sie in der deutschen Patentanmeldung DE 198 28 935 A1 beschrieben werden; sowie
- die aus der deutschen Patentanmeldung DE 199 24 170 A1, Spalte 2, Zeile 6 bis 34, Spalte 4, Zeile 16, bis Spalte 6, Zeile 62, die aus den internationalen Patentanmeldungen WO 00/31194, Seite 11, Zeile 30, bis Seite 12, Zeile 26, und WO 00/37520, Seite 5, Zeile 4, bis Seite 6, Zeile 27, und die aus der europäischen Patentanmeldung EP 0 976 723 A2, Seite 12, Absatz [0128], bis Seite 22, Absatz [0284], bekannten Polyisocyanate (C).

Dabei ist es ein besonderer Vorteil der erfindungsgemäßen Verwendung, dass das Mengenverhältnisse von Verbindungen (B), insbesondere Aminoharzen (B), zu Verbindungen (C) sehr breit variieren kann, so dass auch die stoffliche Zusammensetzung der erfindungsgemäßen Gemische sehr breit variiert und den Erfordernissen des jeweiligen Verwendungszwecks optimal angepasst werden kann. Vorzugsweise liegt das Mengenverhältnisse (B) : (C) bei 0,01 bis 100, bevorzugt 0,1 bis 50 und insbesondere 1 bis 10.

Ein weiterer besonderer Vorteil der erfindungsgemäßen Verwendung ist, dass die Phosphonsäurediester und/oder Diphosphonsäurediestern (A) ihre hervorragenden Wirkungen bereits in vergleichsweise geringen Mengen entfalten. Vorzugsweise werden sie in einer Menge von 0,1 bis 20, bevorzugt 0,5 bis 15 und insbesondere 1 bis 10 Gew.-%, jeweils bezogen auf das jeweils vorliegende erfindungsgemäße Gemisch verwendet.

Das erfindungsgemäße Gemisch enthält obligatorisch mindestens einen, insbesondere einen, der vorstehend beschriebenen Phosphonsäurediester und/oder Diphosphonsäurediester (A) und mindestens eine der vorstehend beschriebenen Verbindungen (B).

Darüber hinaus soll das erfindungsgemäße Gemisch noch mindestens ein Polyisocyanat (C) enthalten.

Nicht zuletzt kann das erfindungsgemäße Gemisch noch mindestens einen Zusatzstoff (D) in wirksamen Mengen enthalten. Vorzugsweise wird der Zusatzstoff (D) aus der Gruppe, bestehend aus von den Verbindungen (B) und (C) verschiedenen Vernetzungsmitteln, mit aktinischer Strahlung, insbesondere UV-Strahlung, aktivierbaren Verbindungen, reaktiven und inerten organischen Lösemitteln, organischen und anorganischen, farbigen und unbunten, optisch effektgebenden, elektrisch leitfähigen, magnetisch abschirmenden und fluoreszierenden Pigmenten, transparenten und opaken, organischen und anorganischen Füllstoffen, Nanopartikeln, UV-Absorbern. Lichtschutzmitteln, Radikalfängern, Photoinitiatoren, Initiatoren der radikalischen Polymerisation, Trockenstoffen, Entlüftungsmitteln, Slipadditiven, Polymerisationsinhibitoren, Entschäumern, Emulgatoren und Netzmitteln, Haftvermittlern, Verlaufmitteln, Filmbildehilfsmitteln, rheologiesteuernden Additiven und Flammschutzmitteln, ausgewählt.

Das erfindungsgemäße Gemisch enthält die vorstehend beschriebenen Bestandteile (B) bis (D) in den üblichen und bekannten Mengen, wie sie beispielsweise aus dem europäischen Patent EP 1 171 356 B1 oder den internationalen Patentanmeldungen WO 01/09261, WO 01/09260, WO 01/09259 oder WO 01/09231 oder dem Lehrbuch von Bodo Müller und Ulrich Poth, »Lackformulierung und Lackrezeptur - Das Lehrbuch für Ausbildung und Praxis«, Hrsg. Dr. Ulrich Zorll, Vincentz Verlag, Hannover, 2003, »2.2 Einbrennlacke auf Basis von Aminoharzen«, Seiten 124 bis 143, »4.2 Wässrige Einbrennlacke auf Basis von Aminharzen«, Seiten 206 bis 215, »1.3.1 Zwei-Komponenten-Systeme (2 K)«, Seiten 98 bis 111, »3.2 Wässrige Zwei-Komponenten-Systeme (2K)«, Seiten 192 bis 197, und »Teil IV Lösemittelfreie Lacke - 1.1 2K-Polyurethan-Beschichtungen«, Seiten 231 bis 233, bekannt sind.

Die erfindungsgemäßen Gemische können in den unterschiedlichsten physikalischen Zuständen und dreidimensionalen Formen vorliegen.

So können die erfindungsgemäßen Gemische bei Raumtemperatur fest oder flüssig bzw. fließfähig sein. Sie können aber auch bei Raumtemperatur fest und bei höheren Temperaturen fließfähig sein, wobei sie vorzugsweise thermoplastisches Verhalten zeigen. Insbesondere können sie konventionelle, organische Lösemittel enthaltende Gemische, wässrige Gemische, im Wesentlichen oder völlig lösemittel- und wasserfreie flüssige Gemische (100%-Systeme), im Wesentlichen oder völlig lösemittel- und wasserfreie feste Pulver oder im Wesentlichen oder völlig lösemittelfreie Pulversuspensionen (Pulverslurries) sein.

Außerdem können sie Einkomponentensysteme, in denen alle Bestandteile nebeneinander in einer Komponente vorliegen, sein.

Bevorzugt sind sie Zwei- oder Mehrkomponentensysteme, insbesondere Zweikomponentensysteme, in denen die Polyisocyanate (C) in einer separaten Komponente (II) bis kurz vor der Herstellung und Applikation des betreffenden erfindungsgemäßen Gemischs getrennt von den übrigen Bestandteilen, insbesondere den Bestandteile (B), vorliegen. Vorzugsweise liegen diese übrigen Bestandteilen in mindestens einer, insbesondere einer, Komponente (I) vor.

Es ist hierbei ein ganz besonderer Vorteil der erfindungsgemäßen Verwendung, des erfindungsgemäßen Gemischs und des erfindungsgemäßen Verfahrens, dass die Phosphonsäurediester und/oder Diphosphonsäurediester (A) auch in der, die Polyisocyanate (C) enthaltenden Komponente (II) der erfindungsgemäßen Zwei- oder Mehrkomponentensysteme enthalten sein können.

Methodisch weist die Herstellung der erfindungsgemäßen Gemische keine Besonderheiten auf, sondern erfolgt nach dem erfindungsgemäßen Verfahren durch das Vermischen und Homogenisieren der vorstehend beschriebenen Bestandteile mit Hilfe üblicher und bekannter Mischverfahren und Vorrichtungen wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer gegebenenfalls unter Ausschluss von aktinischer Strahlung. Die Auswahl der für einen gegebenen Einzelfall optimalen Methode richtet vor allem sich nach dem physikalischen Zustand und der dreidimensionalen Form, den das erfindungsgemäße Gemisch haben soll. Soll beispielsweise ein thermoplastisches erfindungsgemäßes Gemisch in der Form einer Folie oder eines Laminats vorliegen, kommt insbesondere die Extrusion durch eine Breitschlitzdüse für die Herstellung des erfindungsgemäßen Gemischs und dessen Formgebung in Betracht.

Die resultierenden erfindungsgemäßen Gemische werden vorzugsweise zur Herstellung von neuen gehärteten Materialien, insbesondere neuen duroplastischen Materialien, verwendet, die unterschiedlichsten Verwendungszwecken dienen und im folgenden als »erfindungsgemäße Materialien« bezeichnet werden.

Bevorzugt handelt es sich bei den erfindungsgemäßen Gemischen um Ausgangsprodukte für Formteile und Folien oder um Beschichtungsstoffe, Klebstoffe und Dichtungsmassen, insbesondere Beschichtungsstoffe.

Bevorzugt handelt es sich bei den erfindungsgemäßen Materialien um neue Formteile, Folien, Beschichtungen, Klebschichten und Dichtungen, insbesondere neue Beschichtungen.

Insbesondere werden die erfindungsgemäßen Beschichtungsstoffe als neue Primer, Elektrotrauchlacke, Füller, Steinschlagschutzgrundierungen, Unidecklacke, Basislacke, insbesondere Wasserbasislacke, und/oder Klarlacke zur Herstellung von Primerläckierungen, Elektrotauchlackierungen, Füllerlackierungen Grundierungen, Basislackierungen, Unidecklackierungen und/oder Klarlackierungen verwendet. Insbesondere werden sie als Klarlacke zur Herstellung neuer farb- und/oder effektgebender, elektrisch leitfähiger, magnetisch abschirmender oder fluoreszierender Mehrschichtlackierungen, insbesondere farb- und/oder effektgebender, Mehrschichtlackierungen, eingesetzt. Für die Herstellung der erfindungsgemäßen Mehrschichtlackierungen können die üblichen und bekannten Nass-in-nass-Verfahren und/oder Extrusionsverfahren sowie die üblichen und bekannten Lack- oder Folienaufbauten angewandt werden.

Zur Herstellung der erfindungsgemäßen Materialien werden die erfindungsgemäßen Gemische auf übliche und bekannte temporäre oder permanente Substrate appliziert.

Vorzugsweise werden für die Herstellung der erfindungsgemäßen Folien und Formteile übliche und bekannte temporäre Substrate verwendet, wie Metall- und Kunststoffbänder und -folien oder Hohlkörper aus Metall, Glas, Kunststoff, Holz oder Keramik, die leicht entfernt werden können, ohne dass die aus den erfindungsgemäßen Gemischen hergestellten erfindungsgemäße Folien und Formteile beschädigt werden.

Werden die erfindungsgemäßen Gemische für die Herstellung der erfindungsgemäßen Beschichtungen, Klebstoffe und Dichtungen verwendet, werden permanente Substrate eingesetzt, wie Karosserien von Fortbewegungsmitteln, insbesondere Kraftfahrzeugkarosserien, und Teile hiervon, Bauwerke im Innen- und Außenbereich und Teile hiervon, Türen, Fenster, Möbel, Glashohlkörper, Coils, Container, Emballagen, Kleinteile, optische, mechanische und elektrotechnische Bauteile sowie Bauteile für weiße Ware. Die erfindungsgemäßen Folien und Formteile können ebenfalls als permanente Substrate dienen.

Methodisch weist die Applikation der erfindungsgemäßen Gemische keine Besonderheiten auf, sondern kann durch alle üblichen und bekannten, für das jeweilige erfindungsgemäße Gemisch geeigneten Applikationsmethoden, wie z.B. Extrudieren, Elektrotauchlackieren, Spritzen, Sprühen, inklusive Pulversprühen, Rakeln, Streichen, Gießen, Tauchen, Träufeln oder Walzen erfolgen. Vorzugsweise werden Extrusions- und Spritzapplikationsmethoden, insbesondere Spritzapplikationsmethoden, angewandt.

Nach ihrer Applikation werden die erfindungsgemäßen Gemische in üblicher und bekannter Weise thermisch gehärtet.

Die thermische Härtung erfolgt im Allgemeinen nach einer gewissen Ruhezeit oder Ablüftzeit. Sie kann eine Dauer von 30 s bis 2 h, vorzugsweise 1 min bis 1 h und insbesondere 1 bis 45 min haben. Die Ruhezeit dient beispielsweise zum Verlauf und zur Entgasung von Schichten aus den erfindungsgemäßen Gemischen und zum Verdunsten von flüchtigen Bestandteilen wie gegebenenfalls vorhandenem Lösemittel und/oder Wasser. Die Ablüftung kann durch eine erhöhte Temperatur, die zu einer Härtung noch nicht ausreicht, und/oder durch eine reduzierte Luftfeuchtigkeit beschleunigt werden.

Diese Verfahrensmaßnahme wird auch zur Trocknung der applizierten erfindungsgemäßen Gemische, insbesondere der Schichten aus den erfindungsgemäßen Beschichtungsstoffen, speziell der Schichten aus den erfindungsgemäßen Lackschichten, angewandt, die nicht oder nur partiell gehärtet werden sollen.

Die thermische Härtung erfolgt beispielsweise mit Hilfe eines gasförmigen, flüssigen und/oder festen, heißen Mediums, wie heiße Luft, erhitztes Öl oder erhitzte Walzen, oder von Mikrowellenstrahlung, Infrarotlicht und/oder nahem Infrarotlicht (NIR). Vorzugsweise erfolgt das Erhitzen in einem Umluftofen oder durch Bestrahlen mit IR- und/oder NIR-Lampen. Die Härtung kann auch stufenweise erfolgen. Vorzugsweise erfolgt die thermische Härtung bei Temperaturen von Raumtemperatur bis 200°C, bevorzugt von Raumtemperatur bis 180°C und insbesondere von Raumtemperatur bis 160°C.

Die thermische Härtung kann noch durch die physikalische Härtung unterstützt werden, bei der eine Verfilmung durch Lösemittelabgabe aus den erfindungsgemäßen Gemischen eintritt, wobei die Verknüpfung innerhalb der resultierenden erfindungsgemäßen Materialien über eine Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, Härtung«. Seiten 274 und 275).

Die resultierenden erfindungsgemäßen Materialien, insbesondere die resultierenden erfindungsgemäßen Folien, Formteile, Beschichtungen, Klebschichten und Dichtungen, eignen sich hervorragend für das Beschichten, Verkleben, Abdichten, Umhüllen und Verpacken von Karosserien von Fortbewegungsmitteln, insbesondere Kraftfahrzeugkarosserien, und Teilen hiervon, Bauwerken im Innen- und Außenbereich und Teilen hiervon, Türen, Fenstern, Möbeln, Glashohlkörpern, Coils, Container, Emballagen, Kleinteilen, wie Muttern. Schrauben, Felgen oder Radkappen, optischen Bauteilen, mechanischen Bauteilen, elektrotechnischen Bauteilen, wie Wickelgüter (Spulen, Statoren, Rotoren), sowie Bauteilen für weiße Ware, wie Radiatoren, Haushaltsgeräte, Kühlschrankverkleidungen oder Waschmaschinenverkleidungen.

Die erfindungsgemäßen Gemische bieten ganz besonderer Vorteile, wenn sie als erfindungsgemäße Klarlacke zur Herstellung von neuen Klarlackierungen verwendet werden.

Bei den erfindungsgemäßen Klarlackierungen handelt es sich üblicherweise um die äußersten Schichten von Mehrschichtlackierungen oder Folien bzw. Laminaten, die wesentlich den optischen Gesamteindruck (Appearance) bestimmen und die Substrate und/oder die farb- und/oder effektgebenden Schichten von Mehrschichtlackierungen oder Folien bzw. Laminaten vor mechanischer und chemischer Schädigung und Schädigung durch Strahlung schützen. Deswegen machen sich auch Defizite in der Härte, Kratzfestigkeit, Chemikalienbeständigkeit und der Stabilität gegenüber Vergilbung bei der Klarlackierung besonders stark bemerkbar. So aber weisen die hergestellten erfindungsgemäßen Klarlackierungen nur eine geringe Vergilbung auf. Sie sind hoch kratzfest und zeigen nach dem Zerkratzen nur sehr geringe Glanzverluste. Insbesondere ist der Glanzverlust im Waschstraßensimulationstest nach Amtec/Kistler sehr gering. Gleichzeitig haben sie eine hohe Härte und eine besonders hohe Chemikalienfestigkeit. Nicht zuletzt weisen sie eine hervorragende Substrathaftung und Zwischenschichthaftung auf.

### Beispiele und Vergleichsversuche

### Beispiel 1

### Der Herstellung des Zweikomponentensystems 1 und des Klarlacks 1

Es wurde zunächst das Zweikomponentensystem 1 durch Vermischen der jeweiligen Bestandteile der Komponenten (I) und (II) in den angegebenen Mengen und Homogenisieren der resultierenden Mischungen hergestellt.

### Komponente (I):

- 41,15 Gewichtsteile eines hydroxylgruppenhaltigen Polyesters (Desmophen® A 870 der Firma Bayer AG, 70-prozentig in Butylacetat),
- 11,21 Gewichtsteile eines Aminoharzes (Cymel® 202 der Firma Cytec),
- 5,33 Gewichtsteile eines ersten Lichtschutzmittels (Tinuvin® 292 der Firma Ciba Specialty Chemicals, 10-prozentig in Butylacetat)
- 10,67 Gewichtsteile eines zweiten Lichtschutzmittels (Tinuvin® 1130 der Firma Ciba Specialty Chemicals, 10-prozentig in Butylacetat),
- 10,02 Gewichtsteile Methoxypropylacetat (MPA)/Solvesso® 100 (1:1) und
- 2,13 Gewichtsteile Butylglykolacetat.

### Komponente (II):

- 19,49 Gewichtsteile Polyisocyanat (Basonat® HI100 der Firma BASF Aktiengesellschaft, 90-prozentig in Solventnaphtha®) und
- **3 Gewichtsteile Diphenylphosphonat.**

Der Klarlack 1 wurde durch Vermischen der Komponenten (I) und (II) und Homogenisieren der resultierenden Mischung hergestellt. Er wies eine Topfzeit von mehr als 6 Stunden auf.

### Beispiel 2

### Der Herstellung der Klarlackierung 1

Für die Herstellung der Klarlackierung 1 wurden Stahltafeln (Bonder® 26S60) verwendet, die mit einer kathodisch abgeschiedenen und thermisch gehärteten Elektrotauchlackierung und mit einer thermisch gehärteten Füllerlackierung beschichtet worden waren.

Auf die Füllerlackierung wurde der handelsübliche Wasserbasislack Brillantschwarz der Firma BASF Coatings AG appliziert. Die resultierende Wasserbasislackschicht wurde während 10 Minuten bei 80°C getrocknet. Anschließend wurde der Klarlack 1 des Beispiels 1 appliziert, wonach die Wasserbasislackschicht und die Klarlackschicht 1 während 22 Minuten bei 140°C gemeinsam gehärtet wurden. Es resultierten eine Basislackierung einer Schichtdicke von 10 µm und die Klarlackierung 1 einer Schichtdicke von 40 µm.

Die Klarlackierung 1 war völlig klar, frei von Lackstörungen, wie Blasen, Stippen oder Krater, brillant und hochglänzend, frei von Vergilbungen, hart, flexibel, kratzfest, chemikalienbeständig, etchbeständig und abriebfest. Sie war daher hervorragend als Klarlackierung im Rahmen von farb- und effektgebenden Mehrschichtlackierungen für Automobile der Oberklasse geeignet.

Parallel dazu wurde der Verlauf der Vernetzung des Klarlacks 1 IR-spektroskopisch auf einem ATR-Kristall während 25 Minuten anhand der Verschiebung der Frequenz der Melaminbande (1.500 bis 1.550 cm⁻¹) und der Abnahme der Isocyanatbande (2.250 bis 2.300 cm⁻¹) verfolgt. Die IR-Spektren untermauerten, dass in der Gegenwart von Diphenylphosphonat sowohl das Aminoharz als auch das Polyisocyanat in das dreidimensionale Netzwerk eingebaut wurden. Darüber hinaus zeigte es sich, dass auch die durch die Umesterung von Diphenylphosphonat gebildeten Struktureinheiten -O-PH-O- in das dreidimensionale Netzwerk eingebaut wurden.

### Vergleichsversuch V1

### Die Herstellung des Zweikomponentensystems V1

Beispiel 1 wurde wiederholt, nur dass an Stelle von 3 Gewichtsteilen Diphenylphosphonat 6 Gewichtsteile des handelsüblichen sauren Phosphorsäureesters Cycat® 296-9 der Firma Cytec Industries als 50-prozentige Lösung in Butanol verwendet wurden.

Es zeigte sich, dass der saure Phosphorsäureester nicht mit der Komponente II verträglich war, sondern dass es unter Hitzeentwicklung zu unerwünschten Reaktionen kam, die zur weitgehenden Unbrauchbarkeit der Komponente II führten.

### Vergleichsversuch V2

**Die Herstellung des Zweikomponentensystems V2, des Klarlacks V2 und der Klarlackierung V2**

Für die Herstellung des Zweikomponentensystems V2 wurde der Vergleichsversuch V1 wiederholt, nur dass die Lösung des sauren Phosphorsäureesters zur Komponente I hinzu zugegeben wurde.

Die betreffende Komponente I wies eine signifikant geringere Lagerstabilität als die Komponente I des Beispiels 1 oder des Vergleichsversuchs V1 auf.

Bei der Herstellung des Klarlacks V2 kann es unter Hitzeentwicklung zu vorzeitigen, unerwünschten Reaktionen, die zu Trübungen und Stippen führten.

Der Verlauf der Vernetzung des Klarlacks V2 wurde IR-spektroskopisch auf einem ATR-Kristall während 25 Minuten anhand der Verschiebung der Frequenz der Melaminbande (1.500 bis 1.550 cm⁻¹) und der Abnahme der Isocyanatbande (2.250 bis 2.300 cm⁻¹) verfolgt. Die IR-Spektren untermauerten, dass zwar das Aminoharz vernetzte, dass aber die Vernetzung des Polyisocyanats stark beeinträchtigt war.

## Patentansprüche

1. Verwendung von Phosphonsäuredlestern und Diphosphonsäurediestern (A) als Reaktionspartner und/oder Katalysatoren für Verbindungen (B), die durch Umesterung, Umamldlerung, Selbstkondensation von N-Hydroxyalkylamlnogruppen und/oder N-Alkoxyalkylominogruppen, Umacetalislerung von N-Alkoxyalkylamlnogruppen und/oder Acetalisierung von N-Hydroxyalkylaminogruppen umgesetzt werden können, **dadurch gekennzeichnet, dass** die Verbindungen (B) In thermisch härtbaren Gemischen vorliegen und die thermisch härtbaren Gemische Polyisooyanate (C) enthalten.

2. Verwendung nach Anspruch 1, **dadurch gekennzeichnet, dass** die Verbindungen (B) aus der Gruppe, bestehend aus niedermolekularen, allgomeren und polymeren Verbindungen, ausgewählt werden.

3. Verwendung nach einem der Ansprüche 1 bis 2, **dadurch gekennzeichnet, dass** die Verbindungen (B) mindestens zwei reaktive funktionelle Gruppen enthalten, die aus der Gruppe, bestehend aus Hydroxylgruppen, Thiolgruppen, primären Amingruppen, sekundären Aminogruppen, N-Hydroxyalkylamlnogruppen und N-Alkoxyalkylaminogruppen, ausgewählt werden.

4. Verwendung nach Anspruch 3, **dadurch gekennzeichnet, dass**
- die Verbindungen (B), die N-Hydroxyalkylaminogruppen und/oder N-Alkoxyalkylamlnogruppen enthalten, Aminoharze sind und
- die Verbindungen (B), die Hydroxylgruppen, Thiolgruppen, primäre Aminogruppen und sekundäre Aminogruppen enthalten, aus der Gruppe, bestehend aus Additions- und Kondensatlonsharzen sowie (Co)Polymerisaten olefinisch ungesättigter Monomere, ausgewählt werden.

5. Verwendung nach einem der Ansprüche 1 bis 4, **dadurch gekennzeichnet, dass** die Phosphonsäuredlester und die Diphosphonsäurediester (A) aus der Gruppe, bestehend aus acyclischen Phosphonsäurediestern, cyclischen Phosphonsäuredlestem acyclischen Dlphoaphonsäuredlestern und cyclischen Dlphosphonsäurediestem, ausgewählt werden.

6. Verwendung nach Anspruch 5, **dadurch gekennzeichnet, dass** die acyclischen Phosphonsäurediester (A) die allgemeine Formel I haben: 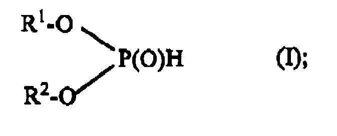 worin die Variablen die folgende Bedeutung haben:
R¹ und R² gleich oder voneinander verschieden und ausgewählt aus der Gruppe, bestehend aus
substituiertem und unsubstltuiertem Alkyl- mit 1 bis 20 Kohlenstoffatomen, Cycloalkyl- mit 3 bis 20 Kohlenstoffatomen und Aryl- mit 5 bis 20 Kohlenstoffatomen, wobei der Strich jeweils die kovalente Bindung zwischen einem Kohlenstoffatom des Rests R¹ oder R² und dem Sauerstoffatom der O-P-Gruppe symbolisiert;
substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und wobei der Strich jeweils die kovalente Bindung zwischen einem Kohlenstoffatom des Rests R¹ und R² und dem Sauerstoffatom der O-P-Gruppe symbolisiert; und
substituiertem und unsubstltulertem Rest- der vorstehend aufgeführten Art, enthaltend mindestens ein Heteroatom, ausgewählt aus der Gruppe, bestehend aus Sauerstoffatom, Schwefelatom, Stickstoffatom, Phosphoratom und Siliziumatom, wobei der Strich die kovalente Bindung zwischen einem Kohlenstoffatom des Rests und dem Sauerstoffatom der O-P-Gruppe symbolisiert.

7. Verwendung nach Anspruch 5, **dadurch gekennzeichnet, dass** die cyclischen Phosphonsäuredlester (A) die allgemeinen Formel II halben: 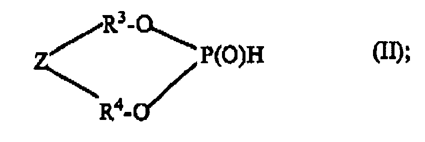 worin die Variablen die folgende Bedeutung haben:
R³ und R⁴ gleich oder voneinander verschieden und ausgewählt aus der Gruppe, bestehend aus
substituiertem und unsubstituiertem, zweibindigem Alkyl- mit 1 bis 20 Kohlenstoffatomen, Cycloalkyl- mit 3 bis 20 Kohlenstoffatomen und Aryl- mit 5 bis 20 Kohlenstoffatomen, wobei der Strich jeweils die kovalente Bindung zwischen einem Kohlenstoffatom des Rests R³ oder R⁴ und dem Sauerstoffatom der O-P-Gruppe symbolisiert;
substituiertem und unsubstitulertem, zweibindigem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und wobei der Strich jeweils die kovalente Bindung zwischen einem Kohlenstoffatom des Rests R³ und R⁴ und dem Sauerstoffatom der O-P-Gruppe symbolisiert; und
substituiertem und unsubstituiertem, zweibindigem Rest- der vorstehend aufgeführten Art, enthaltend mindestens ein Heteroatom, ausgewählt aus der Gruppe, bestehend aus Sauerstoffatom, Schwefelatom, Stickstoffatom, Phosphoratom und Siliziumatom, wobei der Strich die kovalente Bindung zwischen einem Kohlenstoffatom des Rests und dem Sauerstoffatom der O-P-Gruppe symbolisiert.
Z kovalente Bindung zwischen einem Atom des Rests R³ und einem Atom des Rests R⁴ oder
zwelbindige, verküpfende Gruppe, ausgewählt aus der Gruppe, bestehend aus Sauerstoffatom, substituiertem und unsubstituiertem Schwefelatom, substituiertem Stickstoffatom, substituiertem Phosphoratom, substituiertem Siliziumatom, substituiertem und unsubstitulertem, mindestens ein Heteroatom, ausgewählt aus der Gruppe, bestehend aus Sauerstoffatom, Schwefelatom, Stickstoffatom, Phosphoratom und Siliziumatom, enthaltendem und von Heteroatomen freiem Alkyl mit 1 bis 10 Kohlenstoffatomen, Cycloalkyl mit 3 bis 10 Kohlenstoffatomen und Aryl mit 5 bis 10 Kohlenstoffatomen;

8. Verwendung nach Anspruch 5, **dadurch gekennzeichnet, dass** die acyclischen Diphosphonsäurediester (A) die allgemeine Formel III haben:
(R¹-O)(O)PH-O-PH(O)(O-R²) (III);
worin die Variablen die vorstehend angegebene Bedeutung haben.

9. Verwendung nach Anspruch 5, **dadurch gekennzeichnet, dass** die cyclischen Dlphosphonsäuredlester (A) die allgemeine Formel IV haben: 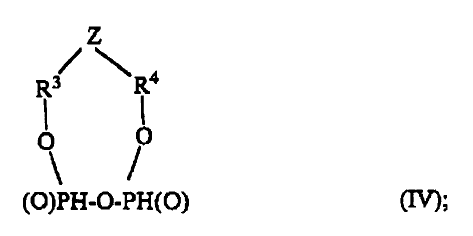 worin die Variablen die vorstehend angegebene Bedeutung haben.

10. Verwendung nach Anspruch 6 oder 8, **dadurch gekennzeichnet, dass** die Variablen R¹ und R² aus der Gruppe, bestehend aus Phenyl, Methyl und Ethyl, ausgewählt werden.

11. Verwendung nach Anspruch 10, **dadurch gekennzeichnet, dass** R¹ und R² Phenyl sind.

12. Thermisch härtbare Gemische, die durch Umesterung, Umamidierung, Selbstkondensation von N-Hydroxyalkylaminogruppen und/oder N-Alkoxyalkytamlnogruppen, Umacetallslerung von N-Alkoxyalkylaminogruppen und/oder Acetallsierung von N-Hydroxyalkylaminogruppen härtbar sind, enthaltend mindestens einen Phosphonsäurediester und/oder mindestens einen Dlphosphonsäurediester (A), **dadurch gekennzeichnet, dass** sie mindestens ein Polylsocyanat (C) enthalten.

13. Thermisch härtbare Gemische nach Anspruch 12, **dadurch gekennzeichnet, dass** sie mindestens eine Verbindung (B) enthalten, die durch Umesterung, Umamidierung, Selbstkondensation von N-Hydroxyalkylaminogruppen und/oder N-Alkoxyalkylaminogruppen, Umacetallslerung von N-Alkoxyalkylamlnogruppen und/oder Acetallsierung von N-Hydroxyalkylaminogruppen umsetzbar ist.

14. Thermisch härtbare Gemische nach Anspruch 12 oder 13, **dadurch gekennzeichnet, dass** die Verbindung (B) mindestens zwei reaktive funktionelle Gruppen enthält, die aus der Gruppe, bestehend aus Hydroxylgruppen, Thiolgruppen, primären Aminogruppen, sekundären Aminogruppen, N-Hydroxyalkylamlnogruppen und N-Alkoxyalkylamlnogruppen, ausgewählt sind.

15. Thermisch härtbare Gemische nach Anspruch 14, **dadurch gekennzeichnet, dass**
- die Verbindungen (B), die N-Hydroxyalkylaminogruppen und/oder N-Alkoxyalkylaminogruppen enthalten, Aminoharze sind und
- die Verbindungen (B), die Hydroxyigruppen, Thiolgruppen, primären Aminogruppen, sekundäre Aminogruppen enthalten, aus der Gruppe, bestehend aus Additions- und Kondensationsharzen sowie (Co)Polymerlsaten olefinisch ungesättigter Monomere, ausgewählt sind.

16. Thermisch härtbare Gemische nach einem der Ansprüche 12 bis 15, **dadurch gekennzeichnet, dass** sie mindestens einen Phosphonsäuradlester und/oder mindestens einen Diphosphonsäurediester (A) gemäß einem der Ansprüche 5 bis 12 enthalten.

17. Thermisch härtbare Gemische nach Anspruch 12, **dadurch gekennzeichnet, dass** sie aus einem Zwei- oder Mehrkomponentensystem herstellbar sind.

18. Thermisch härtbare Gemische nach einem der Ansprüche 12 bis 17, **dadurch gekennzeichnet, dass** sie Beschichtungsstoffe sind.

19. Thermisch härtbare Gemische nach Anspruch 18, **dadurch gekennzeichnet, dass** die Beschichtungsstoffe Primer, Elektrotauchlacke, Steinschlagschutzgrundierungen, Füller, farb- und/oder effektgebende Basislacke, farb- und/oder effektgebende Unldecklacke und Klarlack sind,

20. Thermisch härtbare Gemische nach Anspruch 19, **dadurch gekennzeichnet, dass** die Beschichtungsstoffe Klarlacke zur Herstellung von farb- und/oder effektgebenden Mehrschlchtlacklerungen sind.

21. Verfahren zur Herstellung der thermisch härtbare Gemische gemäß einem der Ansprüche 12 bis 20, **dadurch gekennzeichnet, dass** man mindestens eine Verbindung (B) gemäß einem der Ansprüche 1 bis 4 und mindestens einen Phosphonsäurediester und/oder mindestens einen Dlphosphonsäurediester (A) gemäß einem der Ansprüche 5 bis 11 und mindestens ein Polyisocyanat (C) miteinander vermischt und die resultierenden Mischung homogenisiert.

22. Verfahren nach Anspruch 21, **dadurch gekennzeichnet, dass** man noch mindestens einen Zusatzstoff (D) zusetzt.

23. Verfahren nach Anspruch 22, **dadurch gekennzeichnet, dass** das Polyisocyanat (C) als separate oder in einer separaten Komponente (II) zugesetzt wird.

24. Verfahren nach Anspruch 23, **dadurch gekennzeichnet, dass** die Komponente (II) mindestens einen Phosphonsäurediester und/oder mindestens einen Diphosphonsäurediester (A) gemäß einem der Ansprüche 5 bis 11 enthält.

## Claims

1. Use of phosphonic diesters and diphosphonic diesters (A) as reactants and/or catalysts for compounds (B) which can be reacted by transesterification, transamidation, selfcondensation of N-hydroxyalkylamino groups and/or N-alkoxyalkylamino groups, transacetalization of N-alkoxyalkylamino groups and/or acetalization of N-hydroxyalkylamino groups, **characterized in that** the compounds (B) are present in thermally curable mixtures and the thermally curable mixtures comprise polyisocyanates (C).

2. Use according to Claim 1, **characterized in that** the compounds (B) are selected from the group consisting of low molecular weight, oligomeric, and polymeric compounds.

3. Use according to either of Claims 1 and 2, **characterized in that** the compounds (B) contain at least two reactive functional groups selected from the group consisting of hydroxyl groups, thiol groups, primary amino groups, secondary amino groups, N-hydroxyalkylamino groups, and N-alkoxyalkylamino groups.

4. Use according to Claim 3, **characterized in that**
- the compounds (B) containing N-hydroxyalkylamino groups and/or N-alkoxyalkylamino groups are amino resins and
- the compounds (B) containing hydroxyl groups, thiol groups, primary amino groups, and secondary amino groups are selected from the group consisting of addition resins and condensation resins and also (co)polymers of olefinically unsaturated monomers.

5. Use according to any one of Claims 1 to 4, **characterized in that** the phosphonic diesters and diphosphonic diesters (A) are selected from the group consisting of acyclic phosphonic diesters, cyclic phosphonic diesters, acyclic diphosphonic diesters, and cyclic diphosphonic diesters.

6. Use according to Claim 5, **characterized in that** the acyclic phosphonic diesters (A) have the general formula I: 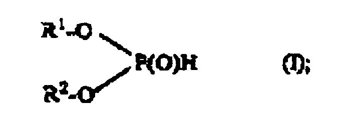 in which the variables have the following definitions:
R¹ and R² are identical or different from one another and are selected from the group consisting of
substituted and unsubstituted alkyl- having 1 to 20 carbon atoms, cycloalkyl- having 3 to 20 carbon atoms, and aryl- having 5 to 20 carbon atoms, the hyphen symbolizing in each case the covalent bond between a carbon atom of the radical R¹ or R² and the oxygen atom of the O-P group;
substituted and unsubstituted alkylaryl-, arylalkyl-, alkylcycloalkyl-, cycloalkylalkyl-, arylcycloalkyl-, cycloalkylaryl-, alkylcycloalkylaryl-, alkylarylcycloalkyl-, arylcycloalkylalkyl-, arylalkylcycloalkyl-, cycloalkylalkylaryl-, and cycloalkylarylalkyl-, the alkyl, cycloalkyl-, and aryl groups therein each containing the above-recited number of carbon atoms and the hyphen symbolizing in each case the covalent bond between a carbon atom of the radical R¹ and R² and the oxygen atom of the O-P group; and
substituted and unsubstituted radical- of the above-recited kind, containing at least one heteroatom selected from the group consisting of oxygen atom, sulfur atom, nitrogen atom, phosphorus atom, and silicon atom, the hyphen symbolizing the covalent bond between a carbon atom of the radical and the oxygen atom of the O-P group.

7. Use according to Claim 5, **characterized in that** the cyclic phosphonic diesters (A) have the general formula II: 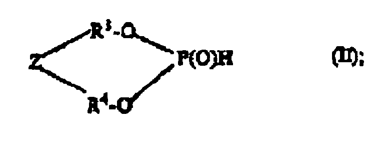 in which the variables have the following definitions:
R³ and R⁴ are identical or different from one another and are selected from the group consisting of
substituted and unsubstituted, divalent alkyl- having 1 to 20 carbon atoms, cycloalkyl- having 3 to 20 carbon atoms, and aryl- having 5 to 20 carbon atoms, the hyphen symbolizing in each case the covalent bond between a carbon atom of the radical R³ or R⁴ and the oxygen atom of the O-P group;
substituted and unsubstituted, divalent alkylaryl-, arylalkyl-, alkylcycloalkyl-, cycloalkylalkyl-, arylcycloalkyl-, cycloalkylaryl-, alkylcycloalkylaryl-, alkylarylcycloalkyl-, arylcycloalkylalkyl-, arylalkylcycloalkyl-, cycloalkylalkylaryl-, and cycloalkylarylalkyl-, the alkyl, cycloalkyl-, and aryl groups therein each containing the above-recited number of carbon atoms and the hyphen symbolizing in each case the covalent bond between a carbon atom of the radical R³ and R⁴ and the oxygen atom of the O-P group; and
substituted and unsubstituted, divalent radical- of the above-recited kind, containing at least one heteroatom selected from the group consisting of oxygen atom, sulfur atom, nitrogen atom, phosphorus atom, and silicon atom, the hyphen symbolizing the covalent bond between a carbon atom of the radical and the oxygen atom of the O-P group;
Z is a covalent bond between an atom of the radical R³ and an atom of the radical R⁴ or
is a divalent linking group selected from the group consisting of oxygen atom, substituted and unsubstituted sulfur atom, substituted nitrogen atom, substituted phosphorus atom, substituted silicon atom, substituted and unsubstituted alkyl having 1 to 10 carbon atoms, cycloalkyl having 3 to 10 carbon atoms, and aryl having 5 to 10 carbon atoms, said alkyl, cycloalkyl, and aryl being free from heteroatoms or containing at least one heteroatom selected from the group consisting of oxygen atom, sulfur atom, nitrogen atom, phosphorus atom, and silicon atom.

8. Use according to Claim 5, **characterized in that** the acyclic diphosphonic diesters (A) have the general formula III:
(R¹-O)(O)PH-O-PH(O)(O-R²) (III);
in which the variables are as defined above.

9. Use according to Claim 5, **characterized in that** the cyclic diphosphonic diesters (A) have the general formula IV: 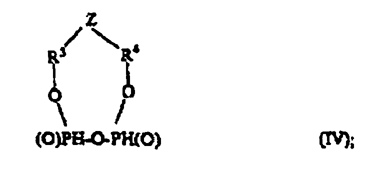 in which the variables are as defined above.

10. Use according to either of Claims 6 and 8, **characterized in that** the variables R¹ and R² are selected from the group consisting of phenyl, methyl, and ethyl.

11. Use according to Claim 10, **characterized in that** R¹ and R² are phenyl.

12. Thermally curable mixtures curable by transesterification, transamidation, selfcondensation of N-hydroxyalkylamino groups and/or N-alkoxyalkylamino groups, transacetalization of N-alkoxyalkylamino groups and/or acetalization of N-hydroxyalkylamino groups, comprising at least one phosphonic diester and/or at least one diphosphonic diester (A) **characterized in that** they comprise at least one polyisocyanate (C).

13. Thermally curable mixtures according to Claim 12, **characterized in that** they comprise at least one compound (B) which can be reacted by transesterification, transamidation, selfcondensation of N-hydroxyalkylamino groups and/or N-alkoxyalkylamino groups, transacetalization of N-alkoxyalkylamino groups and/or acetalization of N-hydroxyalkylamino groups.

14. Thermally curable mixtures according to Claim 12 or 13, **characterized in that** the compound (B) contains at least two reactive functional groups selected from the group consisting of hydroxyl groups, thiol groups, primary amino groups, secondary amino groups, N-hydroxylalkylamino groups, and N-alkoxyalkylamino groups.

15. Thermally curable mixtures according to Claim 14, **characterized in that**
- the compounds (B) containing N-hydroxyalkylamino groups and/or N-alkoxyalkylamino groups are amino resins and
- the compounds (B) containing hydroxyl groups, thiol groups, primary amino groups, and secondary amino groups are selected from the group consisting of addition resins and condensation resins and also (co)polymers of olefinically unsaturated monomers.

16. Thermally curable mixtures according to any one of Claims 12 to 15, **characterized in that** they comprise at least one phosphonic diester and/or at least one diphosphonic diester (A) as set forth in any one of Claims 5 to 12.

17. Thermally curable mixtures according to Claim 12, **characterized in that** they are preparable from a two-component or multicomponent system.

18. Thermally curable mixtures according to any one of Claims 12 to 17, **characterized in that** they are coating materials.

19. Thermally curable mixtures according to Claim 18, **characterized in that** the coating materials are priming materials, electrocoat materials, antistonechip primers, surfacers, color and/or effect basecoats, solid-color and/or effect topcoat and clearcoat materials.

20. Thermally curable mixtures according to Claim 19, **characterized in that** the coating materials are clearcoats for producing multicoat color and/or effect paint systems.

21. Process for preparing the thermally curable mixtures according to any one of Claims 12 to 20, **characterized in that** at least one compound (B) as set forth in any one of Claims 1 to 4 and at least one phosphonic diester and/or at least one diphosphonic diester (A) as set forth in any one of Claims 5 to 11 and at least one polyisocyanate (C) are mixed with one another and the resultant mixture is homogenized.

22. Process according to Claim 21, **characterized in that** at least one additive (D) is additionally added.

23. Process according to Claim 22, **characterized in that** the polyisocyanate (C) is added as a separate or in a separate component (II).

24. Process according to Claim 23, **characterized in that** the component (II) comprises at least one phosphonic diester and/or at least one diphosphonic diester (A) as set forth in any one of Claims 5 to 11.

## Revendications

1. Utilisation de diesters d'acide phosphonique et de diesters d'acide diphosphonique (A) comme partenaires de réaction et/ou comme catalyseurs pour des composés (B) qui peuvent être transformés par transestérification, transamidation, auto-condensation de groupes N-hydroxyalkylamino et/ou de groupes N-alcoxyalkylamino, transacétalisation de groupes N-alcoxyalkylamino et/ou acétalisation de groupes N-hydroxyalkylamino, **caractérisée en ce que** les composés (B) se trouvent dans des mélanges thermodurcissables et les mélanges thermodurcissables contiennent des polyisocyanates (C).

2. Utilisation selon la revendication 1, **caractérisée en ce que** les composés (B) sont choisis dans le groupe constitué par des composés de bas poids moléculaire, oligomères et polymères.

3. Utilisation selon l'une quelconque des revendications 1 et 2, **caractérisée en ce que** les composés (B) contiennent au moins deux groupes fonctionnels réactifs, qui sont choisis dans le groupe constitué par les groupes hydroxyle, les groupes thiol, les groupes amino primaires, les groupes amino secondaires, les groupes N-hydroxyalkylamino et les groupes N-alcoxyalkylamino.

4. Utilisation selon la revendication 3, **caractérisée en ce que**
- les composés (B), qui contiennent des groupes N-hydroxyalkylamino et/ou des groupes N-alcoxyalkylamino, sont des résines amino et
- les composés (B), qui contiennent des groupes hydroxyle, des groupes thiol, des groupes amino primaires et des groupes amino secondaires, sont choisis dans le groupe constitué par les résines d'addition et de condensation ainsi que les (co)polymères de monomères oléfiniquement insaturés.

5. Utilisation selon l'une quelconque des revendications 1 à 4, **caractérisée en ce que** les diesters d'acide phosphonique et les diesters d'acide diphosphonique (A) sont choisis dans le groupe constitué par les diesters acycliques d'acide phosphonique, les diesters cycliques d'acide phosphonique, les diesters acycliques d'acide diphosphonique et les diesters cycliques d'acide diphosphonique.

6. Utilisation selon la revendication 5, **caractérisée en ce que** les diesters acycliques d'acide phosphonique (A) présentent la formule générale 1 : 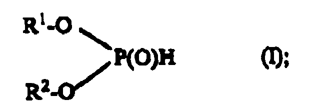 dans laquelle les variables ont la signification suivants :
R¹ et R² sont identiques ou différents l'un de l'autre et choisis dans le groupe constitué par :
- alkyl- comprenant 1 à 20 atomes de carbone, cycloalkyl- comprenant 3 à 20 atomes de carbone et aryl- comprenant 5 à 20 atomes de carbone, substitués ou non substitués, le tiret symbolisant à chaque fois la liaison covalente entre un atome de carbone du radical R¹ ou R² et l'atome d'oxygène du groupe O-P- ;
- alkylaryl-, arylalkyl-, alkylcycloalkyl-, cycloalkylalkyl-, arylcycloalkyl-, cycloalkylaryl-, alkylcycloalkylaryl-, alkylarylcycloalkyl-, arylcycloalkylalkyl-, arylalkylcycloalkyl-, cycloalkylalkylaryl- et cycloalkylarylalkyl-, substitués ou non substitués, où les groupes alkyle, cycloalkyle et aryle contenus ici contiennent à chaque fois le nombre indiqué ci-dessus d'atomes de carbone et où le tiret symbolise à chaque fois la liaison covalente entre un atome de carbone du radical R¹ et R² et l'atome d'oxygène du groupe O-P- ; et
- radical- substitué ou non substitué du type indiqué ci-dessus, contenant au moins un hétéroatome, choisi dans le groupe constitué par l'atome d'oxygène, l'atome de soufre, l'atome d'azote, l'atome de phosphore et l'atome de silicium, le tiret symbolisant la liaison covalente entre un atome de carbone du radical et l'atome d'oxygène du groupe O-P-.

7. Utilisation selon la revendication 5, **caractérisée en ce que** les diesters cycliques d'acide phosphonique (A) présentent la formule générale II : 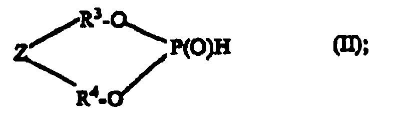 dans laquelle les variables ont la signification suivants :
R³ et R⁴ sont identiques ou différents l'un de l'autre et choisis dans le groupe constitué par :
- alkyl- comprenant 1 à 20 atomes de carbone, cycloalkyl- comprenant 3 à 20 atomes de carbone et aryl- comprenant 5 à 20 atomes de carbone, substitués ou non substitués, divalents, le tiret symbolisant à chaque fois la liaison covalente entre un atome de carbone du radical R³ ou R⁴ et l'atome d'oxygène du groupe O-P- ;
- alkylaryl-, arylalkyl-, alkylcycloalkyl-, cycloalkylalkyl-, arylcycloalkyl-, cycloalkylaryl-, alkylcycloalkylaryl-, alkylarylcycloalkyl-, arylcycloalkylalkyl-, arylalkylcycloalkyl-, cycloalkylalkylaryl- et cycloalkylarylalkyl-, substitués ou non substitués, divalents, où les groupes alkyle, cycloalkyle et aryle contenus ici contiennent à chaque fois le nombre indiqué ci-dessus d'atomes de carbone et où le tiret symbolise à chaque fois la liaison covalente entre un atome de carbone du radical R³ et R⁴ et l'atome d'oxygène du groupe O-P- ; et
- radical- substitué ou non substitué, divalent, du type indiqué ci-dessus, contenant au moins un hétéroatome, choisi dans le groupe constitué par l'atome d'oxygène, l'atome de soufre, l'atome d'azote, l'atome de phosphore et l'atome de silicium, le tiret symbolisant la liaison covalente entre un atome de carbone du radical et l'atome d'oxygène du groupe O-P-.
Z est une liaison covalente entre un atome du radical R³ et un atome du radical R⁴ ou
- un groupe de liaison divalent, choisi dans le groupe constitué par l'atome d'oxygène, l'atome de soufre substitué et non substitué, l'atome d'azote substitué, l'atome de phosphore substitué, l'atome de silicium substitué, alkyle comprenant 1 à 10 atomes de carbone, cycloalkyle comprenant 3 à 10 atomes de carbone et aryle comprenant 5 à 10 atomes de carbone, substitués et non substitués, contenant au moins un hétéroatome choisi dans le groupe constitué par l'atome d'oxygène, l'atome de soufre, l'atome d'azote, l'atome de phosphore et l'atome de silicium et exempts d'hétéroatomes.

8. Utilisation selon la revendication 5, **caractérisée en ce que** les diesters acycliques d'acide diphosphonique (A) présentent la formule générale III :
(R¹-O)(O)PH-O-PH(O)(O-R²) (III) ;
dans laquelle les variables ont la signification indiquée ci-dessus.

9. Utilisation selon la revendication 5, **caractérisée en ce que** les diesters cycliques d'acide diphosphonique (A) présentent la formule générale IV : 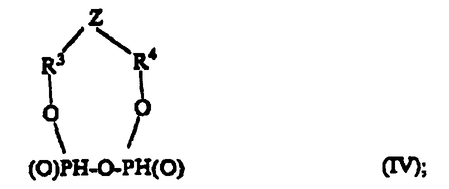 dans laquelle les variables ont la signification indiquée ci-dessus.

10. Utilisation selon la revendication 6 ou 8, **caractérisée en ce que** les variables R¹ et R² sont choisies dans le groupe constitué par phényle, méthyle et éthyle.

11. Utilisation selon la revendication 10, **caractérisée en ce que** R¹ et R² représentent phényle.

12. Mélanges thermodurcissables qui sont durcissables par transestérification, transamidation, auto-condensation de groupes N-hydroxyalkylamino et/ou de groupes N-alcoxyalkylamino, transacétalisation de groupes N-alcoxyalkylamino et/ou acétalisation de groupes N-hydroxyalkylamino, contenant au moins un diester d'acide phosphonique et/ou au moins un diester d'acide diphosphonique (A), **caractérisé en ce qu'**ils contiennent au moins un polyisocyanate (C).

13. Mélanges thermodurcissables selon la revendication 12, **caractérisés en ce qu**'ils contiennent au moins un composé (B) qui peut être transformé par transestérification, transamidation, auto-condensation de groupes N-hydroxyalkylamino et/ou de groupes N-alcoxyalkylamino, transacétalisation de groupes N-alcoxyalkylamino et/ou acétalisation de groupes N-hydroxyalkylamino.

14. Mélanges thermodurcissables selon la revendication 12 ou 13, **caractérisés en ce que** le composé (B) contient au moins deux groupes fonctionnels réactifs, qui sont choisis dans le groupe constitué par les groupes hydroxyle, les groupes thiol, les groupes amino primaires, les groupes amino secondaires, les groupes N-hydroxyalkylamino et les groupes N-alcoxyalkylamino.

15. Mélanges thermodurcissables selon la revendication 14, **caractérisés en ce que**
- les composés (B), qui contiennent des groupes N-hydroxyalkylamino et/ou des groupes N-alcoxyalkylamino, sont des résines amino et
- les composés (B), qui contiennent des groupes hydroxyle, des groupes thiol, des groupes amino primaires, des groupes amino secondaires, sont choisis dans le groupe constitué par les résines d'addition et de condensation ainsi que les (co)polymères de monomères oléfiniquement insaturés.

16. Mélanges thermodurcissables selon l'une quelconque des revendications 12 à 15, **caractérisés en ce qu**'ils contiennent au moins un diester d'acide phosphonique et/ou au moins un diester d'acide diphosphonique (A) selon l'une quelconque des revendications 5 à 12.

17. Mélanges thermodurcissables selon la revendication 12, **caractérisés en ce qu**'ils peuvent être préparés à partir d'un système à deux composants ou plus.

18. Mélanges thermodurcissables selon l'une quelconque des revendications 12 à 17, **caractérisés en ce q**u'il s'agit de substances de revêtement.

19. Mélanges thermodurcissables selon la revendication 18, **caractérisés en ce que** les substances de revêtement sont des apprêts, des laques pour l'électro-immersion, des couches de fond résistantes aux impacts par les graviers, des charges, des laques de base conférant une teinte et/ou un effet, des laques de recouvrement conférant une teinte et/ou un effet et des laques claires.

20. Mélanges thermodurcissables selon la revendication 19, **caractérisés en ce que** les substances de revêtement sont des laques claires destinées à la réalisation de laquages à plusieurs couches conférant une teinte et/ou un effet.

21. Procédé pour la préparation de mélanges thermodurcissables selon l'une quelconque des revendications 12 à 20, **caractérisé en ce qu**'on mélange, les uns avec les autres, au moins un composé (B) selon l'une quelconque des revendications 1 à 4 et au moins un diester d'acide phosphonique et/ou au moins un diester d'acide diphosphonique (A) selon l'une quelconque des revendications 5 à 11 et au moins un polyisocyanate (C) et on homogénéise le mélange résultant.

22. Procédé selon la revendication 21, **caractérisé en ce qu'**on ajoute encore au moins un additif (D).

23. Procédé selon la revendication 22, **caractérisé en ce que** le polyisocyanate (C) est ajouté sous forme de composant séparé ou dans un composant séparé (II).

24. Procédé selon la revendication 23, **caractérisé en ce que** le composant (II) contient au moins un diester d'acide phosphonique et/ou au moins un diester d'acide diphosphonique (A) selon l'une quelconque des revendications 5 à 11.
